# EUROPÄISCHE PATENTANMELDUNG

(11) **EP 0 981 239 A2**
(43) Veröffentlichungstag der Anmeldung: **23.02.2000**
(21) Anmeldenummer: 99115248.9
(22) Anmeldetag: 02.08.1999
(51) Int. Cl.: H04M 3/50

(54) **Verfahren für ein Kommunikationssystem mit automatischer Anrufverteilung**

(30) Priorität: 17.08.1998 DE 19837225
(71) Anmelder: SIEMENS AKTIENGESELLSCHAFT, 80333 München (DE)
(72) Erfinder: Schröder, Simone, 44227 Dortmund (DE); Wiebe, David Werner, 81310-900 Curitiba-Pr (BR); Rist, Claus, 44795 Bochum (DE)

(57) **Zusammenfassung**

Das erfindungsgemäße Verfahren bezieht sich auf eine oder mehrere Gruppen (GRx, Gry) von Arbeitsplatzendgeräten (Agenten-Endgeräte), denen ankommende Anrufe über eine automatische Anrufverteilung (ACD) zu vermitteln sind. Ein Agent hat die Möglichkeit sich über eine Identifikationsinformation (ADI) von jedem Endgerät für eine bestimmte Gruppe anzumelden. Innerhalb einer, durch eine entsprechende An- bzw. Abmeldung aktuell festgelegten Betriebszeit ist der betreffende Agent ausschließlich nur für ein und dieselbe Gruppe verfügbar. Die zeitgleiche Anmeldung an einem anderen Endgerät wird unterbunden. Nach einer Abmeldung kann durch die Eingabe einer anderen Identifikationsnummer die Zuordnung dieses Endgerätes zu einer anderen Gruppe von Arbeitsplatzendgeräten erfolgen. Es kann also bedarfsweise die variable Zuordnung eines Arbeitsplatzendgerätes (Agenten) zu unterschiedlichen Agenten und/oder unterschiedlichen Gruppen erfolgen. Es ist grundsätzlich die gruppen-dynamische und stations-unabhängige An- bzw. Abmeldung von Agenten bei einer automatischen Anrufverteilung möglich. Die exklusive Bindung eines Agenten an ein Arbeitsplatzendgerät ist aufgehoben.

## Beschreibung

Für eine Vermittlung von an ein Kommunikationssystem ankommenden Anrufen an mindestens eine vorgegebene Gruppe von Arbeitsplatzendgeräten, beispielsweise von sogenannten Agentenendgeräten ist das Kommunikationssystem mit einer als automatische Anrufverteilung bezeichneten Funktion ausgestattet. Eine solche, als ACD (Automatic Call Distribution) bekannte Funktion wird z. B. durch spezielle, mit dem System verbundene externe Server bzw. Module, ermöglicht. Bei einer automatischen Anrufverteilung sind einer bestimmten Rufnummer, die eine sogenannte Servicenummer darstellt, eine Gruppe von Agentenendgeräten zugeordnet. Es sind also beispielsweise einer solchen Servicenummer in einer Firma mehrere, z. B. Rufannahmeplätze zugeordnet. Die Servicenummer repräsentiert hierbei einen bestimmten Service-Kommunikationsanschluß. Die zugehörigen Endgeräte werden von als Agenten bezeichneten Sachbearbeitern bedient, die als Beantwortungsgruppe für die Bearbeitung, z. B. von Kundenanrufen zuständig sind. Durch eine solche automatische Anrufverteilung können ankommende Anrufe in einer Warteschlange gehalten, in der Haltezeit Musikeinspielungen oder Ansagen eingeblendet und bei vollständig belegten Agentenendgeräten die Anrufe ggf. auch an Aufzeichnungs- und Antworteinrichtungen weitergeleitet werden. Um eine gleichmäßige Auslastung der Agentenendgeräte innerhalb einer vorgegebenen Gruppe zu erreichen, erfolgt die Rufzuteilung nach einer vorgegebenen Strategie.

Systeme zur automatischen Rufverteilung werden häufig parallel zum Kommunikationssystem betrieben. Das bedeutet, daß dafür dann eine eigene Infrastruktur notwendig wird. Bei sogenannten Call-Center-Anwendungen werden Rechnersysteme bei einfachster Realisierung in Form eines Personalcomputers zur adaptiven Unterstützung des Kommunikationssystems herangezogen. Es ist auch bekannt, die Funktionen zur automatischen Rufverteilung in einem Kommunikationssystem, insbesondere einem Kommunikationssystem einer kleineren oder mittleren Größe zu integrieren. Ein solches Kommunikationssystem mit integrierter ACD-Funktionalität ist beispielsweise durch die Veröffentlichung in 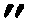 Net, 46 (1992), Heft 3, Seite 109 ff." bekannt.

Es ist üblich, die Konfiguration für die Realisierung der ACD-Funktionalität von einer hierzu als berechtigt definierten Stelle durchzuführen.

Die Aufgabe der Erfindung besteht darin, insbesondere bei kleinen und mittelgroßen Kommunikationssysteme die Festlegung der in die automatische Rufverteilung einbezogenen Agentenendgeräte in einfacher Weise zu ermöglichen. Diese Aufgabe wird durch die Merkmale des Anspruches 1 gelöst.

Der wesentliche Aspekt des erfindungsgemäßen Verfahrens für ein Kommunikationssystem, bei dem ankommende an eine bestimmte Rufnummer adressierte Anrufe im Rahmen einer automatischen Anrufverteilung jeweils einem freien Arbeitsplatzendgerät, das aus einer Gruppe von derartigen dieser bestimmten Rufnummer zugeordneten Arbeitsplatzendgeräten ausgewählt wird, vermittelt werden, ist darin zu sehen, daß eine Zuordnung eines ein Arbeitsplatzendgerät bedienenden Agenten zu einer bestimmten Gruppe festlegende Identifikationsinformation abgespeichert ist. Durch den betreffenden Agenten wird für eine bestimmte Zeitspanne aufgrund der von einem Arbeitsplatzendgerät übermittelten Identifikationsinformation unmittelbar das betreffende Arbeitsplatzendgerät aktuell der dadurch definierten Gruppe zugeordnet. Das auf diese Weise in die automatische Anrufverteilung aufgenommene Arbeitsplatzendgerät ist während der genannten Zeitspanne ausschließlich nur für ein und dieselbe Gruppe verfügbar. Es liegt demnach keine feste Zuordnung eines Agenten zu einem Arbeitsplatzendgerät vor, sondern ein Agent kann über eine bestimmte Anmelde- bzw. Abmeldeprozedur an einem beliebigen Kommunikationsendgerät tätig werden. Durch die Bewertung der festzulegenden Zeitspanne und vermittels der übermittelten Identifikationsinformation können dann jeweils die aktuelle Situation erfassende statistische Informationen gebildet werden.

Da ein Arbeitsplatzendgerät jeweils durch die Übermittlung einer Identifikationsinformation ausschließlich dieser einen dadurch bestimmten Gruppe zuzuordnen ist und durch eine von dem gleichen Arbeitsplatzendgerät ausgehende nachfolgende Übermittlung einer anderen Identifikationsinformation die Umkopplung dieses betreffenden Endgerätes auf die dieser neuen Identifikationsinformation zugeordneten Gruppe vorgenommen wird, ist demnach bedarfsweise die variable Zuordnung eines Arbeitsplatzendgerätes zu unterschiedlichen Agenten und/oder Gruppen vornehmbar. (Anspruch 2) Es können also in unterschiedlichen Zeitspannen andere Agenten in unterschiedlichen Gruppen an demselben Arbeitsplatzendgerät tätig werden. Es werden demnach nicht für jeden Agenten und für jede Gruppe eigene Arbeitsplatzendgeräte benötigt. Durch die Nutzung mehrerer Identifikationsinformationen, die unterschiedlichen in die automatische Rufverteilung einbezogenen Gruppen zugeordnet sind, kann sich also vorteilhaft der Agent von einem beliebigen Arbeitsplatzendgerät bei unterschiedlichen Gruppen anmelden.

Gemäß Anspruch 3 wird durch einen implementieren Algorithmus die zeitgleiche Anmeldung mit ein und derselben Identifikationsinformation an unterschiedlichen Endgeräten unterbunden. Es ist jedoch nach der Eingabe einer Endekennung unmittelbar das gleiche Endgerät innerhalb derselben Gruppe oder für eine andere Gruppe durch die Eingabe der einen anderen tätigwerdenden Agenten kennzeichnenden Identifikationsinformation zuzuordnen.

Sind einem Agenten gemäß Anspruch 4 für unterschiedliche Gruppen jeweils eine individuelle Identifikationsinformation zugeordnet, so kann beim gleichen Endgerät der betreffende Agent für unterschiedliche Gruppen tätig werden oder es kann dieses Endgerät durch einen anderen, vermittels seiner eingegebenen Identifikationsinformation für das System erkennbaren Agenten bedient werden.

Gemäß Anspruch 5 kann die gruppen-dynamisch unabhängige Anmeldung von Agenten darauffolgen, daß die jeweilige Identifikationsinformation nach Eingabe einer bestimmten Anforderungskennzahl oder nach Anforderung über ein vorgegebenes Dialogmenü von einem beliebig auswählbaren Endgerät übermittelbar ist. Damit ist dann dieses betreffende Endgerät dem System gegenüber als Arbeitsplatzendgerät des betreffenden Agenten definiert. In einfacher Weise ist die Endekennung durch die Betätigung einer entsprechend programmierten Funktionstaste vorzunehmen.

Im folgenden wird das erfindungsgemäße Verfahren anhand eines Blockschaltbildes und zweier Ablaufdiagramme näher erläutert.

Dabei zeigen
- FIG 1: das Blockschaltbild eines Kommunikationssystems, in dem Funktionen zur automatischen Rufverteilung integriert sind,
- FIG 2 und FIG 3: jeweils ein Ablaufdiagramm für die Anmeldung bzw. für die Inanspruchnahme eines Agenten.

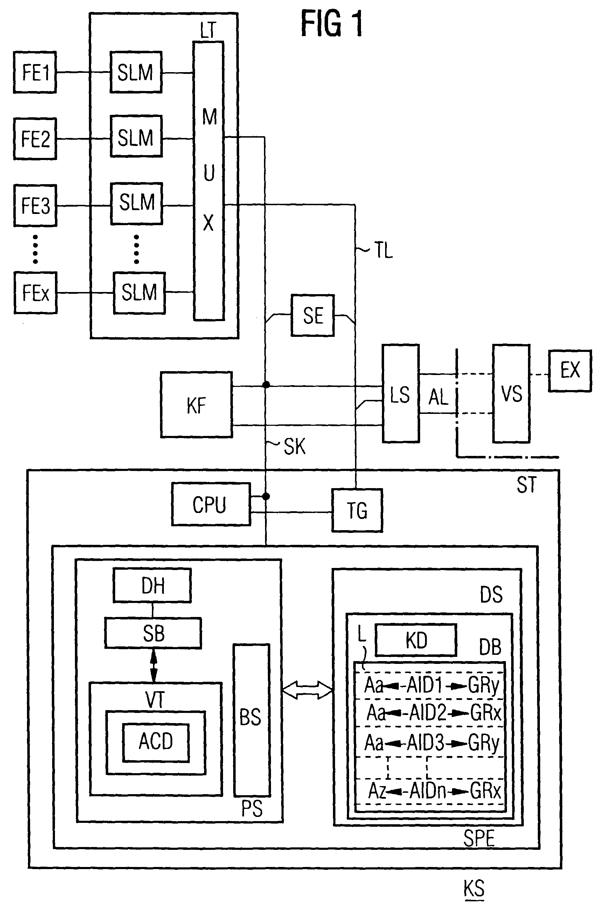

Das Blockschaltbild nach der FIG 1 zeigt ein Kommunikationssystem, beispielsweise ein Kommunikationssystem mittlerer Größe, das mit der Funktion 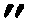 automatische Anrufverteilung" in der Fachwelt als ACD bekannt - ausgestattet ist. Diesbezüglich enthält die zentrale Steuereinheit ST eine entsprechende Steuerprogrammstruktur ACD mit deren Hilfe bei ankommenden, eine sogenannte Servicenummer betreffenden Anrufen, die notwendigen vermittlungstechnischen Abläufe durchgeführt werden. In der FIG 1, in der lediglich die zum Verständnis der Erfindung notwendigen Komponenten dargestellt sind, ist als zentraler Bestandteil des z. B. privaten Kommunikationssystems KS das Koppelfeld KF vorhanden. Durch dieses Koppelfeld sind Endgeräte - von denen die Fernsprechendgeräte FE1 bis FEx schematisch angedeutet sind - miteinander bzw. mit zu einem öffentlichen Kommunikationssystem VS führenden Leitungen AL verbindbar. Das Koppelfeld steht unter dem Steuereinfluß der zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Der Zugriff zu einer Amtsleitung AL erfolgt über die Schnittstelle LS. Diese kann beispielsweise einen ISDN-Teil beinhalten. Die Peripherie des Kommunikationssystems KS wird ergänzt durch eine Signalisierungseinheit SE, die zur Zeichenversorgung des Kommunikationssystems vorhanden ist. Im Kommunikationssystem KS sind Leitungsanschlußeinrichtungen, symbolisiert durch die Leitungsanschlußeinrichtung LT vorhanden. Diese enthalten jeweils Teilnehmeranschlußmodule SLM. Die Teilnehmeranschlußmodule sind über Teilnehmeranschlußleitungen ASL jeweils mit einem der Kommunikationsendgeräte FE verbunden. Sie sind grundsätzlich entweder für den Anschluß von analogen oder für den Anschluß von digitalen Kommunikationsendgeräten vorgesehen. Die vom jeweiligen Kommunikationsendgerät gelieferten digitalen Sprachinformationen werden über eine Multiplexeinrichtung MUX zum Koppelfeld KF weitergegeben. Vermittlungstechnisch gesteuert werden die Leitungsanschlußeinrichtungen LT von der Systemsteuerung ST. Jede Leitungsanschlußeinrichtung ist über einen Signalisierungskanal SK mit der Systemsteuerung verbindbar. Die durch die Systemsteuerung angebotenen Taktsignale werden über eine Taktleitung TL an die Leitungsanschlußeinrichtungen verteilt. Durch die Einheit TG wird symbolisiert, daß durch sie die Taktsignale zur Verfügung gestellt werden.

Der Systemprozessor CPU der Systemsteuerung ST hat Zugriff zu den in der Speichereinrichtung SPE abgelegten Informationen. Diese Speichereinrichtung ist grundsätzlich in dem Programmspeicher PS und in den Datenspeicher DS unterteilt. Im Programmspeicher PS sind unter anderen das Betriebssystem BS und die zu ihm bezüglich der Peripherietechnik, der Betriebstechnik, der Sicherheitstechnik und der Vermittlungstechnik gehörenden Programme abgespeichert. Das Betriebssystem BS koordiniert die für das Kommunikationssystem KS typische Vielzahl von quasi gleichzeitig anfallenden und auch zu erledigenden Einzelaufgaben. Seine wesentliche Aufgabe besteht darin, in Abhängigkeit von eingetroffenen oder innerhalb der Systemsteuerung gebildeten Anreize dem Systemprozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz besteht deshalb in der Systemsteuerung eine anreizindividuelle Verarbeitungsvorschrift zur Verfügung, die als jeweiliges Programmodul im Programmspeicher PS hinterlegt ist. In der Figur ist das vermittlungstechnische Programmodul VT stellvertretend für die übrigen Module angedeutet. Mit ACD ist dasjenige Modul bezeichnet, das symbolisch für die zur Realisierung der im Zusammenhang mit der automatischen Anrufverteilung insgesamt notwendigen Steuerabläufe steht.

In dem Speicherteil DS ist als Teileinheit der Datenbasis DB der Bereich KD angedeutet. In diesem Speicherbereich sind die sogenannten Kundendaten abgelegt. Der Datenspeicher DS dient unter anderem der Aufnahme von temporären Daten zur Programmablaufsteuerung. Es werden in ihm auch Daten übernommen, die während eines durch ein Endgerät initiierten Verbindungsaufbaus bzw. während einer Gesprächsverbindung abgefragt bzw. erzeugt werden.

Für jedes der dargestellten Fernsprechendgeräte FE ist zu seiner Steuerung ein an das jeweilige Endgerät angepaßte Leitungsprogrammodul vorhanden, das im Programmspeicher PS durch das Modul DH symbolisiert ist. Jedes dieser vorhandenen Module DH bietet eine systemeinheitliche Schnittstelle zur vermittlungstechnischen Strukturebene, die durch das bereits erwähnte Vermittlungsprozedur-Programmodul VT repräsentiert ist. Der Informationsaustausch zwischen den beiden genannten Struktur- bzw. Steuerungsebenen erfolgt mittels definierter Meldungen, die beispielsweise über die angedeutete Software-Bus-Struktur SB übertragen werden. Diese kann als integraler Bestandteil des Betriebssystems angesehen werden.

Die automatische Anrufverteilung ist integraler Bestandteil des Kommunikationssystems in gleicher Weise wie sonstige Leistungsmerkmale. Die ACD-Funktionalität ist für den ankommenden Fernsprechverkehr maßgebend, wobei dieser Telefonverkehr in aller Regel sachbezogener Natur ist. Der Anrufer möchte z. B. über eine ihm bekannte Servicenummer nicht eine bestimmte Person sprechen, sondern eine Dienstleistung in Anspruch nehmen. Hierzu können Sachbearbeiter, die für die Bearbeitung der Kundenanrufe zuständig sind, in bestimmte Beantwortungsgruppen gegliedert werden. Innerhalb der für die Erreichbarkeit einer Dienstleistung zuständigen Beantwortungsgruppe werden z. B. die Verbindungen in der Reihenfolge ihres Eintreffens dem am längsten freien Arbeitsplatzendgerät zugeteilt. Damit wird dann eine gleichmäßige Auslastung dieser Arbeitsplatzendgeräte, die von sogenannten Agenten bedient werden, erreicht. Im Zusammenhang mit einem solchen Anrufverteilungsmechanismus sind Melde- und/oder Warteansagen üblich. Neben dem Zugang zu einer durch eine Beantwortungsgruppe übernommenen bestimmten Dienstleistung, wie z. B. Verkauf oder Service können auch z. B. bei einem kleineren oder mittleren Kommunikationssystem die eine Zentrale bedienenden Mitarbeiter als eine ACD-Gruppe eingerichtet werden. Diese bekommen dann die Anrufe, die an die Zentrale des Kommunikationssystems geleitet werden, gleichmäßig verteilt.

Im Gegensatz zu einem üblichen Verfahren, bei dem ein Bediener eines für eine ACD-Funktion vorgesehenen Arbeitsplatzendgerätes sich nur bei einer ihm festzugeordneten Endgerät exklusiv für eine ihm jeweils fest zugeordnete Bearbeitungsgruppe anmelden kann, ist bei der erfindungsgemäßen Lösung eine gruppendynamische und stationsunabhängige An- bzw. Abmeldung derartiger Mitarbeiter, allgemein als Agenten bezeichneten, möglich. Einen derartigen Agenten, der also einen ACD-Teilnehmer darstellt dem besondere Funktionsmöglichkeiten zugewiesen sind, ist von der Systemverwaltung eine Identifikationsinformation AID zugeordnet. Diese Identifikationsinformation repräsentiert ihrerseits eine bestimmte ACD-Beantwortungsgruppe GR. Die Zuordnung der Identifikationsinformation einerseits zu dem Agenten und andererseits zu der Gruppe ist listenmäßig z. B. im Datenspeicher abgelegt. Diese beispielsweise in der Datenbasis DB geführte Liste L ist über die Systemverwaltung zu erstellen und auch zu ändern. Eine derartige Liste - ist unter der Voraussetzung von beispielsweise zwei Beantwortungsgruppen GRx und GRy, die in vorgegebener Weise den Identifikationsinformationen AID1 bis AIDn zugeordnet sind - im Blockschaltbild der FIG 1 symbolisch angedeutet. Neben der jeweiligen Beantwortungsgruppe ist einer Identifikationsinformation ein bestimmter Agent von den insgesamt vorgesehenen Agenten Aa bis Az zugeordnet. Wie den Listeneinträgen zu entnehmen ist, kann einem Agenten auch mehr als eine Identifikationsinformation zugeordnet werden. Dies ist beispielsweise für den Agenten Aa vorgesehen. Dieser Agent kann also sowohl für die Gruppe GRy als auch für die Gruppe GRx tätig werden. Dies ist jedoch nicht zur gleichen Zeit möglich, sondern dieses tätig werden kann lediglich in verschiedenen Zeiträumen erfolgen. Vermittels der einem Agenten zugeordneten weiteren Identifikationsinformation wird es einem Agenten damit ermöglicht, am gleichen Endgerät anschließend für eine andere Gruppe tätig zu werden.

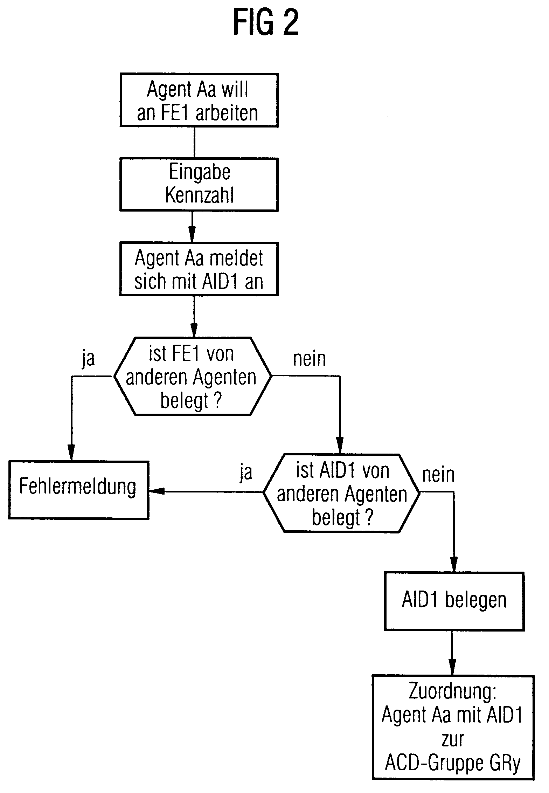

Ein Agent, der an einem Endgerät, beispielsweise dem Endgerät FE1 arbeiten will, meldet sich von dem Endgerät diesem System gegenüber an. Nach Eingabe einer Kennzahl oder auch über ein Servicemenü steht dem betreffenden Agenten die Log-in-Prozedur zur Verfügung. Die diesbezüglichen Abläufe bis zur Zuordnung zu einer Gruppe sind im Ablaufdiagramm nach der FIG 2 dargestellt. Nach dem Eingeben der Identifikationsinformation AID1, die beispielsweise dem Agenten Aa zugeordnet ist, steht er dann, falls das betreffende Endgerät FE1 nicht von einem anderen Agenten bereits belegt wurde, der betreffenden Gruppe GRy zur Verfügung. Gemäß Eintrag in der Liste ist z. B. die Identifikationsinformation AID1 für den Agenten Aa an die Gruppe GRy gekoppelt. Aufgrund der getätigten Anmeldung ist also der Agent Aa mit dem Endgerät FE1 der ACD-Gruppe GRy zugeordnet. Durch die vorgenommene Prozedur erfolgt eine Konfiguration, die für eine bestimmte Zeit den betreffenden Agenten variabel einer Gruppe zuordnet. Diese Zuordnung erfolgt bis zum 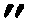 Log-off". Nach diesem Abmelden, das z. B. auch mit einer dann bestimmten vorgegebenen Prozedur erfolgen kann, ist der Agent für diese jeweilige ACD-Gruppe nicht mehr verfügbar. Die Verknüpfung der den Agenten charakterisierenden Identifikationsinformation AID zu dem betreffenden Endgerät wird reset-fest gespeichert, um nach einem Reset des Systems den Agenten an diesen gleichen Endgerät erneut anmelden zu können. Nach dem Abmelden des Agenten von diesem betreffenden Endgerät wird diese Verknüpfung gelöst. Diese Abmeldung könnte auch durch die Betätigung einer entsprechend belegten Funktionstaste vorgenommen werden.

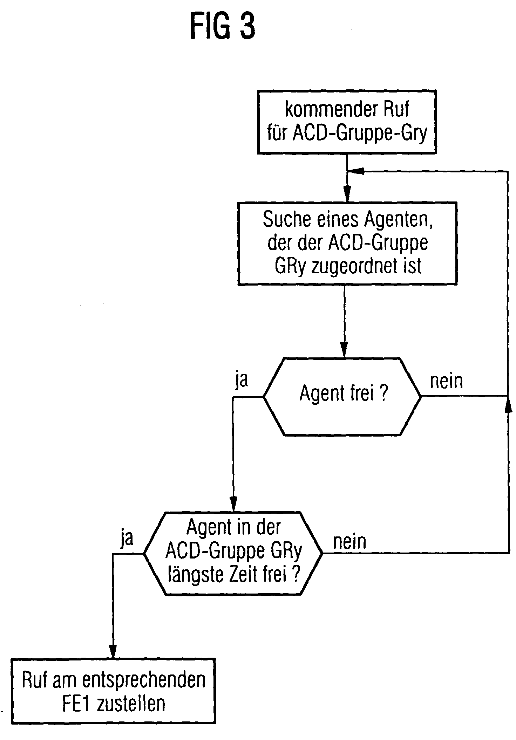

Im Ablaufdiagramm nach der FIG 3 ist dargestellt, wie ein kommender Ruf, der z. B. aufgrund einer gewählten Servicenummer für die ACD-Gruppe GRy gelten soll, einem Endgerät zugeteilt wird. Nach der Annahme des entsprechenden Rufes wird dann dieser z. B. durch eine entsprechende Suche innerhalb der für diese Gruppe aktiv angemeldeten Agenten demjenigen zugeteilt, der am Längsten frei ist. Für diese entsprechende Zuteilung können auch andere Kriterien zugrunde gelegt werden. Im Zusammenhang mit der dynamischen An- und Abmeldemöglichkeit innerhalb einer Gruppe kann bei der erfindungsgemäßen systemintegrierten ACD-Lösung falls benötigt eine statistische Datenerfassung vorgenommen werden. Die Tätigkeit ist nicht an einen bestimmten Arbeitsplatz gebunden. Ein Gruppenmitglied kann bei Bedarf flexibel diesen Arbeitsplatz wechseln bzw. verlassen und in einem anderen Raum die Tätigkeit fortführen.

## Patentansprüche

1. Verfahren für ein Kommunikationssystem, insbesondere kleines oder mittelgroßes Kommunikationssystem, bei dem ankommende an eine bestimmte Rufnummer (Servicenummer) adressierte Anrufe im Rahmen einer automatischen Anrufverteilung jeweils einem freien Arbeitsplatzendgerät, das aus einer Gruppe von derartigen dieser bestimmten Rufnummer zugeordneten Arbeitsplatzendgeräten ausgewählt wird, vermittelt werden, wobei die automatische Anrufverteilung durch eine im System implementierte Programmstruktur realisiert ist,
**dadurch gekennzeichnet,**
daß eine die Zuordnung eines ein Arbeitsplatzendgerät bedienenden Agenten zu einer bestimmten Gruppe festlegendes Identifikationsinformation (ADI) abgespeichert ist, daß aufgrund der von einem Arbeitsplatzendgerät übermittelten Identifikationsinformation unmittelbar das betreffende Arbeitsplatzendgerät aktuell der dadurch definierten Gruppe zugeordnet und in die automatische Anrufverteilung aufgenommen ist, daß das betreffende Arbeitsplatzendgerät durch die Eingabe einer Endekennung aus der Gruppe der aktuell zur Verfügung stehenden Arbeitsplatzendgeräte herausgeschaltet wird und daß innerhalb der aktuellen Betriebszeit das betreffende Arbeitsplatzendgerät ausschließlich nur für ein und dieselbe Gruppe verfügbar ist.

2. Verfahren nach Anspruch 1,
**dadurch gekennzeichnet,**
daß ein Arbeitsplatzendgerät jeweils durch die Übermittlung einer Identifikationsinformation ausschließlich dieser einen dadurch bestimmten Gruppe zuzuordnen ist, daß durch eine von dem gleichen Arbeitsplatzendgerät ausgehenden nachfolgenden Übermittlung einer anderen Identifikationsinformation die Umkopplung dieses Endgerätes auf die dieser Identifikationsinformation zugeordneten Gruppe vorgenommen wird, so daß bedarfsweise die variable Zuordnung eines Arbeitsplatzendgerätes zu unterschiedlichen Agenten und/oder Gruppen vornehmbar ist.

3. Verfahren nach Anspruch 1,
**dadurch gekennzeichnet,**
daß durch einen implementieren Algorithmus die zeitgleiche Anmeldung mit ein und derselben Identifikationsinformation an unterschiedlichen Endgeräten unterbunden ist, daß nach der Eingabe einer Endekennung unmittelbar das gleiche Endgerät innerhalb derselben Gruppe oder für eine andere Gruppe durch die Eingabe der einen entsprechend tätig werdenden Agenten kennzeichnenden Identifikationsinformation zuzuordnen ist.

4. Verfahren nach einem der Ansprüche 1 bis 3,
**dadurch gekennzeichnet,**
daß einem ein Arbeitsplatzendgerät bedienenden Agenten für unterschiedliche Gruppen jeweils eine jede Gruppe individuelle bezeichnende Identifikationsinformation zugeordnet ist.

5. Verfahren nach einem der vorhergehenden Ansprüche,
**dadurch gekennzeichnet,**
daß die Identifikationsinformation nach Eingabe einer bestimmten Anforderungskennzahl oder nach Anforderung über ein vorgegebenes Dialog-Menü von einem beliebig auswählbaren Endgerät übermittelbar ist, so daß dadurch dieses Endgerät im als Arbeitsplatzendgerät definiert ist.

6. Verfahren nach Anspruch 1,
**dadurch gekennzeichnet,**
daß die Endekennung durch die Betätigung einer entsprechend programmierten Funktionstaste vorgenommen wird.
